Europäisches Patentamt

European Patent Office

Office européen des brevets

(19)

(11) **EP 0 886 792 B1**

(12) **EUROPEAN PATENT SPECIFICATION**

(45) Date of publication and mention
of the grant of the patent:
**12.05.2004 Bulletin 2004/20**

(21) Application number: **97908242.7**

(22) Date of filing: **13.03.1997**

(51) Int Cl.[7]: **G01V 3/14**, G01V 3/32

(86) International application number:
**PCT/EP1997/001313**

(87) International publication number:
**WO 1997/034166 (18.09.1997 Gazette 1997/40)**

(54) **DETERMINING A FLUID FRACTION IN AN EARTH FORMATION**

FESTSTELLUNG DES FLÜSSIGKEITSGEHALTES IN EINER ERDFORMATION

DETERMINATION D'UNE FRACTION FLUIDIQUE DANS UNE FORMATION TERRESTRE

(84) Designated Contracting States:
**GB NL**

(30) Priority: **14.03.1996 EP 96200695**

(43) Date of publication of application:
**30.12.1998 Bulletin 1998/53**

(73) Proprietor: **SHELL INTERNATIONALE
RESEARCH MAATSCHAPPIJ B.V.
2596 HR Den Haag (NL)**

(72) Inventors:
• **BONNIE, Ronald, Johannes, Maria
NL-3125 AE Schiedam (NL)**
• **HOFSTRA, Paul
NL-2288 GD Rijswijk (NL)**
• **LOOYESTIJN, Wilhelmus, Johannes
NL-2288 GD Rijswijk (NL)**
• **SANDOR, Robert, Karl, Josef
NL-2596 HR The Hague (NL)**

(74) Representative:
**Zeestraten, Albertus Wilhelmus Joannes et al
Shell International B.V.,
Intellectual Property Services,
P.O. Box 384
2501 CJ The Hague (NL)**

(56) References cited:
WO-A-97/01110          WO-A-97/01772
GB-A- 2 276 007        GB-A- 2 299 170
GB-A- 2 299 171        US-A- 4 885 540
US-A- 4 933 638        US-A- 5 497 087

**Description**

The present invention relates to a method of determining a fluid fraction in an earth formation using nuclear magnetic resonance (NMR) technology. In the industry of hydrocarbon production from an earth formation containing hydrocarbon fluid and water it is generally desired to determine the water saturation, or conversely the hydrocarbon saturation, in the formation to assess the technical and economical feasibility of hydrocarbon production from the formation. Such assessment can be desired for example for a new field or for a partially depleted field containing a residual or remaining volume of oil.

A commonly applied logging technique for determining oil, gas or water in an earth formation is NMR logging. In this technology the time evolution of the transverse relaxation of nuclear magnetism of water and oil contained in the formation is probed.

The observed magnetisation decay curve of the echo height is essentially multi-exponential and can be represented by:

$$M(t) = M(o) \int_0^{\tilde{}} P(T_2) e^{-t/T_2} dT_2 \qquad (1)$$

in which $P(T_2)dT_2$ represents the fraction of fluid with a transverse relaxation time between $T_2$ and $T_2 + dT$.

The oil, gas, or water saturation is then determined from the observed NMR relaxation times of the different fluids in the formation. However, in order to distinguish the signals originating from water and oil in the formation it is required that these signals have sufficiently different NMR relaxation times. Such may be the case with very heavy oils having relaxation times less than a few milliseconds while the water has relaxation times in the range of ten to several hundreds of milliseconds. Usually the difference is not so pronounced, so that the distinction between the water and the oil can only be made by displacing the water in the formation near borehole with mud-filtrate containing paramagnetic ions which shorten the relaxation time of water to a few milliseconds. The composite NMR decay curve measured at times greater than typically 20 ms then can be interpreted as originating from the oil only. Although this technique has been successfully applied, it has the drawback of having to use a special mud and to achieve the required invasion of mud-filtrate in the formation around the wellbore, which makes the known method costly and time consuming. Furthermore, full displacement is not guaranteed and cannot be easily checked. Also, this technique is often applied in a producing reservoir, and the invaded mud may drift away from the wellbore before the measurements have been completed.

EP-A-489578 discloses a method of conducting a pulse-echo NMR measurement in a borehole. In this method a static magnetic field and a magnetic field gradient are applied in the formation surrounding the borehole, followed by a series of NMR electro-magnetic pulses. The attenuation of the NMR echoes is used to determine the diffusion coefficient D and the transverse relaxation time $T_2$. This publication discloses that the diffusion coefficient D can be applied to determine water and hydrocarbon saturation levels. However, it is not disclosed how such water and hydrocarbon saturation levels can be determined. Furthermore, the disclosure only mentions a single diffusion coefficient D which either relates to water only or to hydrocarbon fluid only.

USA patent No. 5,497,087 discloses a NMR logging method for estimating the pore size of a formation comprising hydrocarbon gas, the gas having a longitudinal relaxation time. The known method comprises performing two NMR logs, one with a relaxation time less than the longitudinal relaxation time of the gas, and one with a relaxation time equal to or greater than the longitudinal relaxation time of the gas. The difference between the two logs represents the gas contribution to the responses from the NMR logs. The gas contribution is used to determine the pore size.

A restricted diffusion coefficient of the gas is only calculated from a distribution of transverse relaxation times of the gas, in order to estimate the pore size.

It is an object of the present invention to provide an improved method of determining a fluid fraction in an earth formation containing at least two fluids.

In accordance with the invention there is provided a method of determining the fraction of a fluid selected from at least two fluids contained in an earth formation, the method comprising

    a) inducing a magnetic field in a region of said earth formation;
    b) conducting a pulse-echo NMR measurement in said region of the earth formation;
    characterized in that the fluids have different NMR diffusion coefficients and that the magnetic field has a magnetic field gradient, and in that the method further comprises the steps of
    c) selecting a relationship between the NMR echo response from said fluids, the fractions of the fluids, the NMR diffusion coefficients of the fluids, and at least one variable which affects the NMR echo response in a manner dependent on the fractions of said fluids, wherein the at least one variable includes the product of the NMR pulse spacing and the magnetic field gradient;

d) varying said at least one variable in the course of the NMR measurement thereby affecting the measured NMR echo response in a manner dependent on the fractions of said fluids; and

e) determining the fraction of the selected fluid by simultaneously inverting the NMR echo response data obtained for different values of the at least one variable, using said selected relationship.

Since the time-evolution of the NMR echoes is affected in a manner dependent on the fractions of the fluids, and since the measured NMR echoes are a superposition of the echoes from the individual fluids, the distinction between the echoes from the individual fluids can be made through the effect of the variation of the variable on the measured NMR echo response. The at least one variable includes the product of the NMR pulse spacing and the magnetic field gradient. Variations in the magnitude of the product can be accomplished by variations in the NMR pulse spacing and/or the magnetic field gradient.

In the presence of a magnetic field gradient, the time-evolution of the measured NMR echoes is affected by molecular self-diffusion. Thus, the distinction between the echoes from the individual fluids can be made through the diffusion effect on the measured NMR echo response.

Preferably at least two NMR pulse time intervals of different length are applied in the NMR measurement, which pulse time intervals of different length are suitably applied in a single NMR logging sequence, in a single logging pass cyclicly, or in separate logging passes.

A suitable NMR logging sequence is the Carr-Purcell-Meiboom-Gill (CPMG) sequence according to:

$$TR - 90° \pm x - (t_{cp,j} - 180°_y - t_{cp,j} - echo_j) \tag{2}$$

wherein

TR is the wait time between sequences;

$t_{cp,j}$ is the Carr-Purcell spacing;

x, y are the phases of the 90° and 180° pulses respectively; and

j is the index of the echo signal.

For a single fluid the NMR echo decay curve in a gradient magnetic field and a constant $t_{cp}$ can be described by:

$$M(t) = M(0) \, \Sigma \, A_i \, \exp(-t/T_{2,i})\exp(-t \, \gamma^2 \, D \, G^2 \, t_{cp}^2/3)$$

$$(1-\exp(-TR/T_{1,i})) \tag{3}$$

in which

$A_i$ is the fluid fraction with transverse relaxation time $T_{2,i}$

M(0) is the signal amplitude at time t = 0

$T_{2,i}$ is the transverse relaxation time of fluid fraction $A_i$

$T_{1,i}$ is the longitudinal relaxation time of fluid fraction $A_i$

$\gamma$ is the gyromagnetic ratio of the subject nucleus of the fluid

G is the gradient of the magnetic field

D is the molecular self-diffusion coefficient of the fluid in the porous rock.

The NMR echo curve from a formation which contains a plurality of fluids is the superposition of the echoes generated by the individual fluids according to:

$$M(t) = \Sigma \, M_j(t) \tag{4}$$

in which $M_j(t)$ is the NMR echo decay of the j-th fluid fraction as described by eq. (3).

The magnitude of the diffusion coefficient D is related to the temperature and the viscosity of the fluid and can be approximated by the empirical relationship

$$D = 2.5\, T/300\eta \; (10^{-9}\, m^2/s) \tag{5}$$

in which

    $T$ is temperature (K);
    $\eta$ is viscosity (cP).

Molecular diffusion in a porous medium is essentially restricted, which implies that $D$ is not a constant, but a function of the effective diffusion time, given by $2t_{cp}$, and the geometry of the pore system.

It will be clear that the distinction between the echoes from different fluids can be made by virtue of the effect of the different diffusion coefficients on the NMR response (by varying the pulse time interval), and / or by virtue of the effect of their different longitudinal relaxation times on the NMR response (by varying TR).

In an advantageous embodiment of the invention said at least one variable includes the wait time between NMR pulse sequences, which wait time is for example TR in case of a CPMG sequence.

It is even more attractive to apply a first variable in the form of the product of the NMR pulse spacing and the magnetic field gradient, and a second variable in the form of the wait time between NMR pulse sequences (TR in case of the CPMG sequence). It will be understood that the first variable would then be combined with a magnetic field gradient and application to fluids having different NMR diffusion coefficients.

Step e) of the method according to the invention preferably comprises applying an inversion method to the measured NMR echo response and said selected relationship.

It is more preferred to invert the measured NMR echo response data obtained for variations in at least one variable (for example a first and a second variable) simultaneously using a suitable representation of equation (4), as such an approach allows for wide ranges of said variables, allows for possibly different noise levels on the individual decay curves, and allows for any number of decay curves to be taken into account.

Example

The determination of water saturation in a rock formation containing a medium gravity oil and water by applying a gradient magnetic field NMR measurements on a sample of the rock formation, is illustrated hereinafter with reference to the appended drawings, in which

    Figs. 1-4 show schematically NMR decay curves for an earth formation having oil saturations of respectively 0.15, 0.3, 0.45 and 0.6; and
    Fig. 5 shows schematically the ratio of the NMR echo signals for two different pulse time intervals as a function of oil saturation, for different time values.

Two transverse relaxation times and two corresponding volume fractions were selected to model the water. The component with the short relaxation time represents bound water and remains constant, whereas the component with the long relaxation time represents movable water and varies with the oil saturation. The oil was modelled by one transverse relaxation time and one corresponding volume fraction. The parameter values were selected as follows:

    $T_{2,w,1} = 10$ ms
    $A_{w,1} = 0.25$
    $T_{2,w,2} = 100$ ms
    $A_{w,2} = 0.60;\ 0.45;\ 0.30;\ 0.15$ respectively
    $D_w = 3.0\ E\text{-}9\ m^2/s$
    $T_{2,o} = 50$ ms
    $A_o = 0.15;\ 0.30;\ 0.45;\ 0.60$ respectively
    $G = 0.2$ T/m
    $\gamma = 2\pi\ 42.565$ MHz/T.

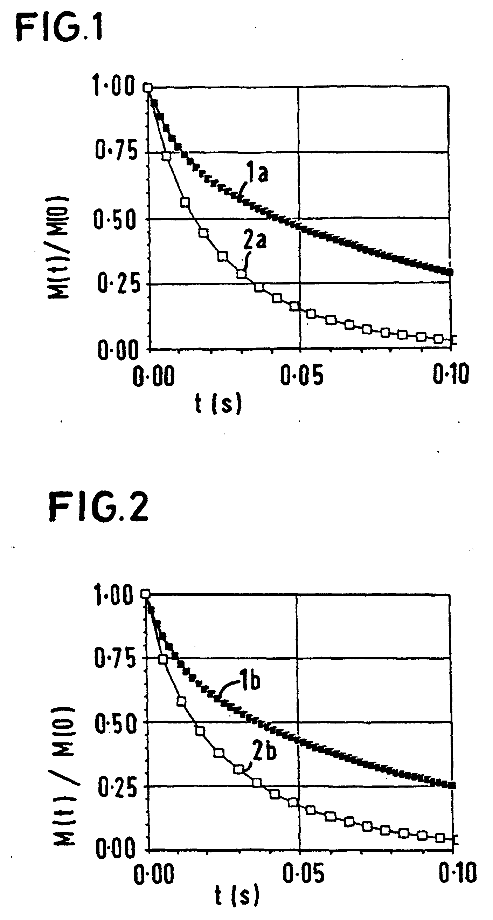

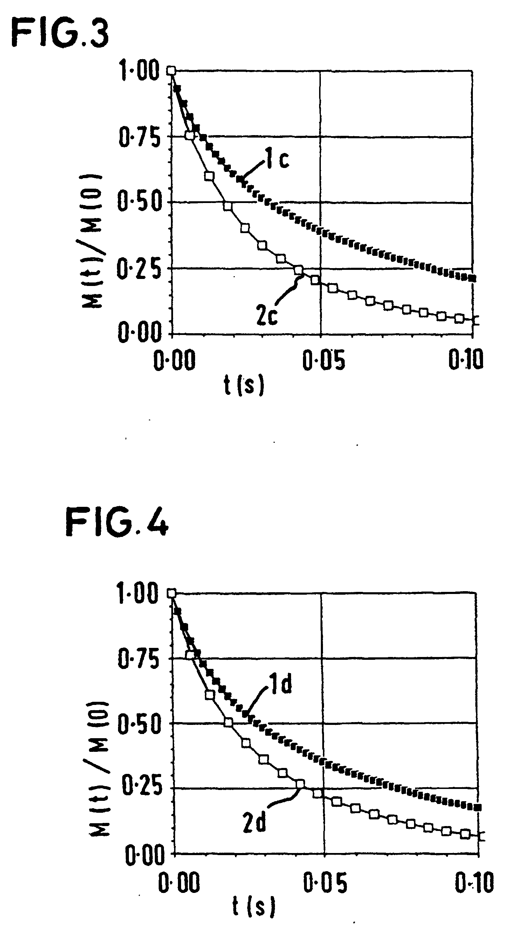

Each of Figs. 1-4 shows normalised NMR echo decay curves for two pulse time intervals ($2t_{cp}$), wherein in each of these Figures the upper curve (indicated by numeral 1a, 1b, 1c, 1d) represents the NMR response as a function of time $t$ for pulse time interval $2t_{cp} = 2$ ms, and the lower curve (indicated by numeral 2a, 2b, 2c, 2d) represents the response as a function of time $t$ for pulse time interval $2t_{cp} = 6$ ms. Furthermore, the oil saturation in Fig. 1 is $A_o = 0.15$, in Fig. 2 is $A_o = 0.3$, in Fig. 3 is $A_o = 0.45$, and in Fig. 4 is $A_o = 0.6$.

As is clear from these Figures the separation between the upper curve (1a, 1b, 1c, 1d) and the lower curve (2a, 2b, 2c, 2d) decreases with increasing oil saturation. Thus by applying at least two different pulse. time intervals the separation between the upper and lower curve was determined, and from the separation the oil saturation was determined.

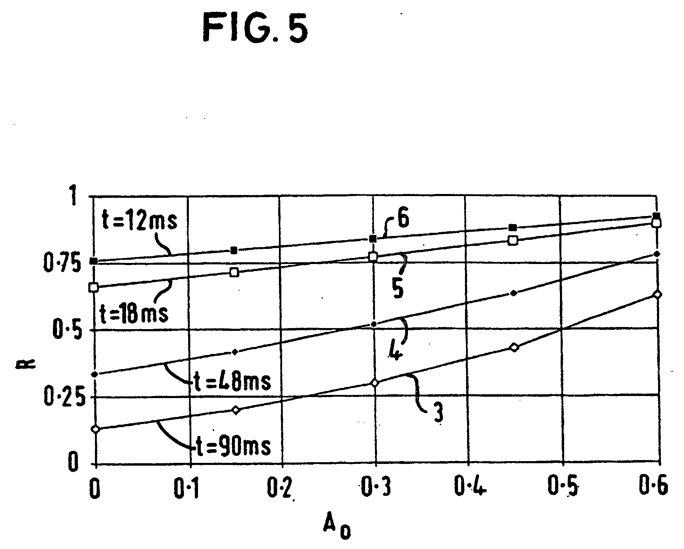

While it is proposed that the water saturation (or the oil saturation) be determined from fitting the full curves to an appropriate form of eq. (4) employing a suitable numerical minimisation routine, the sensitivity of the method according to the invention can be appreciated from Fig. 5 which shows curves 3, 4, 5, 6 representing the ratio $R = M(t, 2t_{cp} = 6)/M(t, 2t_{cp} = 2)$ for selected t values, as a function of oil saturation $A_o$. The selected t value for curve 3 is t = 90 ms, for curve 4 is t = 48 ms, for curve 5 is t = 18 ms, and for curve 6 is t = 12 ms.

By repeating the method for a range of practical values for the water and oil parameters, it was found that the method according to the invention is only weakly dependent on the actual values of the oil parameters. If no information on these parameters is available, errors in estimated water saturation may be up to 0.1. If the oil viscosity can be estimated at an accuracy of two decimals, the resulting error in water saturation is negligible compared to the overall accuracy of the measurement.

The method can be carried out, for example, in situ via a borehole formed in the earth formation or in a laboratory using a core sample taken from the formation.

Furthermore, the method is attractive to determine remaining oil saturation in case a waterflood or a gas drive has been applied to the earth formation in order to displace oil in the formation.

**Claims**

1. A method of determining the fraction of a fluid selected from at least two fluids contained in an earth formation, the method comprising

   a) inducing a magnetic field in a region of said earth formation; and
   b) conducting a pulse-echo NMR measurement in said region of the earth formation,
   **characterized in that** the fluids have different NMR diffusion coefficients and that the magnetic field has a magnetic field gradient, and **in that** the method further comprises the steps of
   c) selecting a relationship between the NMR echo response from said fluids, the fractions of the fluids, the NMR diffusion coefficients of the fluids, and at least one variable which affects the NMR echo response in a manner dependent on the fractions of said fluids, wherein the at least one variable includes the product of the NMR pulse spacing and the magnetic field gradient;
   d) varying said at least one variable in the course of the NMR measurement thereby affecting the measured NMR echo response in a manner dependent on the fractions of said fluids; and
   e) determining the fraction of the selected fluid by simultaneously inverting the NMR echo response data obtained for different values of the at least one variable, using said selected relationship.

2. The method of claim 1, wherein at least two NMR pulse spacings of different length are applied in the NMR measurement.

3. The method of claim 1 or 2, said product of the NMR pulse spacing and the magnetic field gradient forming a first variable, and wherein said at least one variable includes a second variable being the wait time between NMR pulse sequences.

4. The method of claim 3, wherein the measured NMR echo response data obtained by varying the first and second variables are inverted simultaneously.

5. The method of any one of claims 1-4, wherein said NMR measurement includes a CPMG sequence, as defined hereinbefore.

6. The method of any one of claims 1-5, wherein said relationship is of the form:

$$M(t) = \Sigma\, M_j\,(t);$$

as defined hereinbefore.

**7.** The method of any one of claims 1-6, wherein said earth formation contains hydrocarbon fluid and water, and said selected fluid forms hydrocarbon fluid.

**8.** The method of claim 7, wherein the selected fluid forms at least one of oil and gas.

**9.** The method of claim 8, wherein said selected fluid forms residual or remaining oil contained in the earth formation after a waterflood or a gas drive has been applied to the formation.

**Patentansprüche**

**1.** Verfahren zum Feststellen des Gehaltes eines Fluids, das aus zumindest zwei Fluiden gewählt wird, die in einer Erdformation enthalten sind, wobei das Verfahren aufweist:

a) Induzieren eines Magnetfeldes in einem Bereich der Erdformation; und

b) Durchführen einer Puls-Echo-NMR-Messung in dem Bereich der Erdformation,
**dadurch gekennzeichnet, daß** die Fluide unterschiedliche NMR-Diffusionskoeffizienten haben und das Magnetfeld einen Magnetfeldgradienten hat, und daß das Verfahren ferner die Schritte aufweist:

c) Wählen einer Beziehung zwischen der NMR-Echo-Antwort der Fluide, den Gehalten der Fluide, den NMR-Diffusionskoeffizienten der Fluide und zumindest einer Variablen, welche die NMR-Echo-Antwort auf eine Weise beeinflußt, die vom Gehalt der Fluide abhängt, wobei die zumindest eine Variable das Produkt der NMR-Impulsabstände und des Magnetfeldgradienten enthält;

d) Variieren der zumindest einen Variablen während der NMR-Messung, wodurch die gemessene NMR-Echo-Antwort auf eine Weise beeinflußt wird, die von den Gehalten der Fluide abhängt; und

e) Bestimmen des Gehaltes des ausgewählten Fluids durch gleichzeitiges Invertieren der NMR-Echo-Antwortdaten, die für verschiedene Werte der zumindest einen Variablen erhalten worden sind, unter Verwendung der ausgewählten Beziehung.

**2.** Verfahren nach Anspruch 1, bei welchem zumindest zwei NMR-Impulsabstände unterschiedlicher Länge in der NMR-Messung angewendet werden.

**3.** Verfahren nach Anspruch 1 oder 2, bei welchem das Produkt der NMR-Impulsabstände und des Magnetfeldgradienten eine erste Variable bildet, und bei welchem die zumindest eine Variable eine zweite Variable aufweist, welche die Wartezeit zwischen den NMR-Impulssequenzen darstellt.

**4.** Verfahren nach Anspruch 3, bei welchem die durch Variieren der ersten und zweiten Variablen erhaltenen gemessenen NMR-Echo-Antwortdaten gleichzeitig invertiert werden.

**5.** Verfahren nach einem der Ansprüche 1-4, bei welchem die NMR-Messung eine CPMG-Sequenz aufweist, wie vorstehend definiert.

**6.** Verfahren nach einem der Ansprüche 1-5, bei welchem die Beziehung in der Form $M(t) = \Sigma\, M_j\,(t)$ wie vorstehend definiert ist.

**7.** Verfahren nach einem der Ansprüche 1-6, bei welchem die Erdformation Kohlenwasserstofffluide und Wasser enthält und das gewählte Fluid ein Kohlenwasserstofffluid ist.

**8.** Verfahren nach Anspruch 7, bei welchem das gewählte Fluid zumindest eines aus der Gruppe Öl und Gas ist.

**9.** Verfahren nach Anspruch 8, bei welchem das gewählte Fluid Rückstandsöl oder verbleibendes Öl in der Erdformation bildet, nachdem eine Wasserspülung oder ein Austreibgas an die Formation angelegt worden ist.

**Revendications**

1.  Procédé de détermination de la fraction d'un fluide choisi parmi au moins deux fluides contenus dans une formation terrestre, le procédé comprenant :

    a) l'induction d'un champ magnétique dans une zone de ladite formation terrestre; et
    b) la réalisation d'une mesure de R.M.N. par écho d'impulsion dans ladite zone de la formation terrestre,
    **caractérisé en ce que** les fluides ont des coefficients de diffusion R.M.N. différents et que le champ magnétique a un gradient de champ magnétique, et **en ce que** le procédé comprend de plus les étapes de
    c) sélection d'une relation entre l'échoréponse R.M.N. desdits fluides, les fractions des fluides, les coefficients de diffusion R.M.N. des fluides, et au moins une variable qui influence l'échoréponse R.M.N. d'une manière dépendant des fractions desdits fluides, dans lequel au moins la variable comprend le produit de l'espacement entre impulsions R.M.N. et du gradient de champ magnétique,
    d) la variation d'au moins la variable précitée au cours de la mesure R.M.N. en influençant ainsi l'échoréponse R.M.N. mesurée d'une manière dépendant des fractions des fluides précités; et
    e) la détermination de la fraction du fluide sélectionné en inversant simultanément les données d'échoréponse R.M.N. obtenues pour différentes valeurs d'au moins la variable, en utilisant la relation sélectionnée précitée.

2.  Procédé suivant la revendication 1, dans lequel au moins deux espacements entre impulsions R.M.N. de longueur différente sont appliqués dans la mesure de R.M.N.

3.  Procédé suivant l'une ou l'autre des revendications 1 et 2, le produit précité de l'espacement entre impulsions R. M.N. et du gradient de champ magnétique formant une première variable, et dans lequel au moins la variable précitée comprend une seconde variable qui est le temps d'attente entre des successions d'impulsions R.M.N.

4.  Procédé suivant la revendication 3, dans lequel les données d'échoréponse R.M.N. mesurées obtenues en faisant varier la première et la seconde variable sont inversées simultanément.

5.  Procédé suivant l'une quelconque des revendications 1 à 4, dans lequel la mesure de R.M.N. précitée comprend une séquence CPMG, telle que définie précédemment.

6.  Procédé suivant l'une quelconque des revendications 1 à 5, dans lequel la relation précitée est sous la forme :

$$M(t) = \Sigma\ M_j\ (t)$$

    telle que définie précédemment.

7.  Procédé suivant l'une quelconque des revendications 1 à 6, dans lequel la formation terrestre précitée contient un fluide hydrocarboné et de l'eau, et le fluide sélectionné précité forme un fluide hydrocarboné.

8.  Procédé suivant la revendication 7, dans lequel le fluide sélectionné forme au moins un composant parmi l'huile et le gaz.

9.  Procédé suivant la revendication 8, dans lequel le fluide sélectionné précité forme l'huile résiduelle ou restante contenue dans la formation terrestre après qu'une injection d'eau ou une poussée dé gaz a été appliquée à la formation.

## FIG.1

## FIG.2

# FIG.3

# FIG.4

# FIG. 5